# EUROPEAN PATENT APPLICATION

(11) **EP 4 362 538 A1**
(43) Date of publication of application: **01.05.2024**
(21) Application number: 23746038.1
(22) Date of filing: 16.01.2023
(51) Int. Cl.: H04W 24/08

(54) **CHANNEL ALLOCATION METHOD AND NETWORK DEVICE**

(30) Priority: 30.01.2022 CN 202210114327
(71) Applicant: Huawei Technologies Co., Ltd., Shenzhen, Guangdong 518129 (CN)
(72) Inventor: ZHAN, Jun, Shenzhen, Guangdong 518129 (CN); ZHU, Zhenwen, Shenzhen, Guangdong 518129 (CN)
(74) Representative: Huawei European IPR
(86) International application number: PCT/CN2023/072274
(87) International publication number: WO 2023/143156

(57) **Abstract**

A dynamic channel allocation system and a network device are disclosed, to eliminate a case in which a same channel is allocated to an occluded AP pair. The method includes: After obtaining signal interference distribution between a plurality of APs and an occlusion relationship between the plurality of APs, a radio controller allocates channels to the plurality of APs based on the signal interference distribution and the occlusion relationship, where channels allocated to APs that have an occlusion relationship are different. In this application, after obtaining the occlusion relationship between the plurality of APs, the radio controller allocates, during channel allocation to the plurality of APs, different channels to APs that have an occlusion relationship, so that co-channel interference caused by the case in which a same channel is allocated to an occluded AP pair is avoided, and communication quality of a wireless network is improved.

## Description

This application claims priority to Chinese Patent Application CN202210114327.6, filed with the China National Intellectual Property Administration on January 30, 2022 and entitled "CHANNEL ALLOCATION METHOD AND NETWORK DEVICE", which is incorporated herein by reference in its entirety.

### TECHNICAL FIELD

Embodiments of this application relate to the field of wireless communication, and in particular, to a channel allocation method and a network device.

### BACKGROUND

Because available electromagnetic wave frequency bands are limited, access points (access points, APs) in a wireless local area network (WLAN) inevitably use a same frequency band for information transmission. When two adjacent APs use a same frequency band as a working channel, co-channel signal interference is caused between the two APs when the two APs operate.

To reduce frequency of this case, a radio calibration technology is introduced. In the radio calibration technology, channels are allocated based on signal interference distribution between APs. To the fullest extent, different channels are allocated to an AP pair between which there is strong signal interference, to avoid co-channel interference. An AP pair between which there is no signal interference or there is weak signal interference may use a same channel. However, in an actual application scenario, a plurality of APs are not inevitably disposed in an open area. If there is an occluder such as a beam or a wall between two adjacent APs, when two APs detect each other, as a path loss value is large due to the occluder, a radio controller considers that the two APs are far away from each other. Therefore, during channel allocation, a same channel may be allocated to the two APs. When the two APs operate simultaneously, due to co-channel signal interference between the APs, communication quality of a terminal located in common coverage of the two APs that performs wireless communication via the two APs is affected. In addition, because a signal between the two APs is weak, the two APs are hidden nodes. Interference of hidden nodes to the terminal is severer than that of common adjacent co-channel APs.

### SUMMARY

This application provides a channel allocation method and a network device, to eliminate a case in which a same channel is allocated to an occluded AP pair.

A first aspect of this application provides a channel allocation method. The method includes: A radio controller obtains signal interference distribution between a plurality of APs and an occlusion relationship between the plurality of APs. The radio controller allocates channels to the plurality of APs based on the signal interference distribution and the occlusion relationship, where channels allocated to APs that have an occlusion relationship are different. In this application, the radio controller obtains the signal interference distribution between the plurality of APs and the occlusion relationship between the plurality of APs, so that during channel allocation to the plurality of APs, the radio controller may allocate, based on the signal interference distribution and the occlusion relationship, different channels to the APs that have an occlusion relationship, to reduce co-channel interference.

In a possible implementation of the first aspect, that the radio controller allocates channels to the plurality of APs based on the signal interference distribution and the occlusion relationship includes: The radio controller allocates a channel to a first AP from an optional channel set. A channel allocated to a second AP is excluded from the optional channel set, the second AP has an occlusion relationship with the first AP, and the first AP and the second AP are APs in the plurality of APs. In this implementation, the radio controller selects the channel for the first AP from the optional channel set, to avoid a case in which a same channel is allocated to the first AP and the second AP that have an occlusion relationship. The radio controller sequentially allocates channels to the APs, so that the purpose of allocating different channels to the APs that have an occlusion relationship is efficiently achieved.

In a possible implementation of the first aspect, that the radio controller allocates channels to the plurality of APs based on the signal interference distribution and the occlusion relationship includes: The radio controller selects a channel combination for the plurality of APs from an optional channel combination set. An interference channel combination is excluded from the optional channel combination set, the channel combination is a combination of channels respectively allocated to the plurality of APs, and the interference channel combination is a channel combination in which a same channel is allocated to APs that have an occlusion relationship. In this implementation, the radio controller considers the plurality of APs as an entirety, and selects the channel combination for the plurality of APs from the optional channel combination set. The channel combination is the combination of the channels respectively allocated to the plurality of APs, the interference channel combination is excluded from the optional channel combination set, and the interference channel combination is the channel combination in which the same channel is allocated to the APs that have an occlusion relationship. The channels are allocated to the plurality of APs by calculating optional channel combinations, so that a channel combination with an optimal indicator can be selected from the optional channel combinations.

In a possible implementation of the first aspect, that the radio controller selects a channel combination for the plurality of APs from an optional channel combination set includes: The radio controller selects the channel combination for the purpose of reducing a sum of interference between the APs. In this implementation, the radio controller selects, through calculation, the channel combination for the purpose of reducing the sum of interference between the APs. Therefore, a sum of interference in a wireless network managed by the radio controller is reduced, and communication efficiency and communication quality of the wireless network are improved.

In a possible implementation of the first aspect, that the radio controller allocates channels to the plurality of APs based on the signal interference distribution and the occlusion relationship includes: The radio controller divides the plurality of APs into at least two groups, where in any one of the groups, there is no AP that has an occlusion relationship with an AP in another group. The radio controller allocates the channels to the plurality of APs by group. In this implementation, after obtaining the signal interference distribution between the plurality of APs and the occlusion relationship between the plurality of APs, the radio controller divides the plurality of APs into the at least two groups, where in any one of the groups, there is no AP that has an occlusion relationship with an AP in another group. The radio controller allocates the channels to the plurality of APs by group. By dividing the plurality of APs into groups, a calculation amount for the radio controller to calculate the optional channel combination set is reduced, and channel allocation efficiency is improved.

A second aspect of this application provides a network device. The network device includes: an obtaining unit, configured to obtain signal interference distribution between a plurality of APs and an occlusion relationship between the plurality of APs; and an allocation unit, configured to allocate channels to the plurality of APs based on the signal interference distribution and the occlusion relationship, where channels allocated to APs that have an occlusion relationship are different.

In a possible implementation of the second aspect, the allocation unit is specifically configured to allocate a channel to a first AP in an optional channel set. An intersection set of the optional channel set and a channel allocated to a second AP is null, the second AP has an occlusion relationship with the first AP, and the first AP and the second AP are APs in the plurality of APs.

In a possible implementation of the second aspect, the allocation unit is specifically configured to divide the plurality of APs into at least two groups, where in any one of the groups, there is no AP that has an occlusion relationship with an AP in another group, and allocate the channels to the plurality of APs by group.

In a possible implementation of the second aspect, the allocation unit is specifically configured to select a channel combination for the plurality of APs from an optional channel combination set. An interference channel combination is excluded from the optional channel combination set, the channel combination is a combination of channels respectively allocated to the plurality of APs, and the interference channel combination is a channel combination in which a same channel is allocated to APs that have an occlusion relationship.

In a possible implementation of the second aspect, the allocation unit is specifically configured to select the channel combination for the purpose of reducing a sum of interference between the APs.

A third aspect of this application provides a network device. The network device includes a processor and a memory. The processor is coupled to the memory, the memory stores a program, and when the program instructions stored in the memory are executed by the processor, the channel allocation method described in any one of the first aspect or the possible implementations of the first aspect is implemented.

A fourth aspect of this application provides a chip. The chip includes at least one processor and at least one interface circuit. The interface circuit is coupled to the processor. The at least one interface circuit is configured to perform a sending and receiving function, and send instructions to the at least one processor. The at least one processor is configured to run a computer program or the instructions. The at least one processor has functions of implementing the channel allocation method in any one of the first aspect or the possible implementations of the first aspect.

A fifth aspect of this application provides a computer-readable storage medium. The computer-readable storage medium stores instructions. When the instructions are run on a computer, the computer is enabled to perform the channel allocation method in any one of the first aspect or the possible implementations of the first aspect.

A sixth aspect of this application provides a computer program product. The computer program product includes computer instructions. When the computer instructions are executed by a computing device, the computing device performs the method described in the first aspect.

### BRIEF DESCRIPTION OF DRAWINGS

FIG. 1 is a schematic diagram of a system of a wireless local area network according to an embodiment of this application;
FIG. 2A is a schematic diagram of an AP deployment scenario according to an embodiment of this application;
FIG. 2B is another schematic diagram of an AP deployment scenario according to an embodiment of this application;
FIG. 3 is a schematic flowchart of a channel allocation method according to an embodiment of this application;
FIG. 4 is another schematic flowchart of a channel allocation method according to an embodiment of this application;
FIG. 5 is a schematic diagram of channel allocation combinations according to an embodiment of this application;
FIG. 6 is another schematic flowchart of a channel allocation method according to an embodiment of this application;
FIG. 7 is a schematic diagram of another system of a wireless local area network according to an embodiment of this application;
FIG. 8 is a schematic diagram of a structure of a network device according to an embodiment of this application; and
FIG. 9 is a schematic diagram of another structure of a network device according to an embodiment of this application.

### DESCRIPTION OF EMBODIMENTS

Embodiments of this application provides a dynamic channel allocation method and a network device, to eliminate a case in which a same channel is allocated to an occluded AP pair.

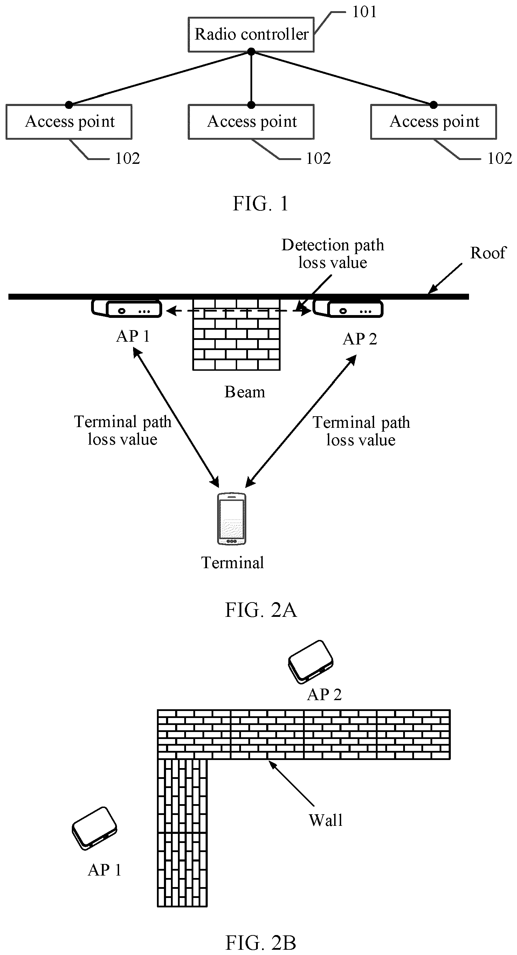

First, a wireless local area network (wireless local area network, WLAN) in this application is briefly described. FIG. 1 is a schematic diagram of a system of a wireless local area network according to an embodiment of this application. The WLAN network system includes a radio controller 101 and a plurality of access points 102. The radio controller 101 is communicatively connected to the plurality of access points 102, and the radio controller 101 may centrally manage the plurality of access points 102. The radio controller may be an access controller (Access Controller, AC).

A connection relationship between the radio controller and the plurality of APs in the WLAN network may be learned from FIG. 1. During actual application, in addition to connections between the radio controller and the APs, there are also connections between the APs and a terminal. In a specific scenario, location relationships between the APs and the terminal inevitably affect communication quality. In a wireless communication technology, the radio controller allocates channels to the plurality of APs based on results, reported by the plurality of APs, of mutual detection between the plurality of APs, so that different channels are allocated to two APs that are physically close to each other. However, in an actual scenario, for two APs that are physically close to each other, there may be the case shown in FIG. 2A or FIG. 2B. FIG. 2A is a schematic diagram of an AP deployment scenario according to an embodiment of this application. FIG. 2B is another schematic diagram of an AP deployment scenario according to an embodiment of this application.

As shown in FIG. 2A, an AP 1 and an AP 2 are occluded by a beam. The AP 1 and the AP 2 detect each other, receive a respective detection feedback signal after mutual detection, and perform calculation on the detection feedback signal to obtain received signal strength indication (received signal strength indication, RSSI) data. Because the beam occludes an electromagnetic wave, a path loss value between the AP 1 and the AP 2 is larger due to the existence of the beam between the AP 1 and the AP 2, in comparison with that in an open scenario in which there is no beam, and an RSSI value between the AP 1 and the AP 2 is therefore smaller. Usually, the radio controller determines a distance between the AP 1 and the AP 2 directly based on the RSSI value or the path loss value between the AP 1 and the AP 2. As a result, when the radio controller determines the distance between the AP 1 and the AP 2 based on the RSSI value or the path loss value, the radio controller may wrongly determine that the distance between the AP 1 and the AP 2 is long.

As shown in FIG. 2B, an AP 1 and an AP 2 are occluded by a wall. The AP 1 and the AP 2 detect each other, and receive a respective detection feedback signal after mutual detection, and perform calculation on the detection feedback signal to obtain RSSI data. Because the wall occludes an electromagnetic wave, a path loss value between the AP 1 and the AP 2 is larger due to the existence of the wall between the AP 1 and the AP 2, in comparison with that in an open scenario in which there is no wall, and an RSSI value between the AP 1 and the AP 2 is therefore smaller. Usually, the radio controller determines a distance between the AP 1 and the AP 2 directly based on the RSSI value or the path loss value between the AP 1 and the AP 2. As a result, when the radio controller determines the distance between the AP 1 and the AP 2 based on the RSSI value or the path loss value, the radio controller may wrongly determine that the distance between the AP 1 and the AP 2 is long.

Therefore, to avoid adverse impact caused by the wrong determining on subsequent channel allocation, in other words, to avoid a case in which a same channel is allocated to two APs whose location relationship is similar to the location relationship between the AP 1 and the AP 2 in FIG. 2A or FIG. 2B, it is considered that an AP 1 has an occlusion relationship with an AP 2 when a location relationship between the AP 1 and the AP 2 that are close to each other is similar to that shown in FIG. 2A or FIG. 2B.

In a channel allocation process, the radio controller learns of, based on RSSIs or path loss values measured between the APs, signal interference distribution between the plurality of APs managed by the radio controller. There are two APs between which there is no signal interference due to a long distance.

In the channel allocation method provided in this application, the radio controller obtains the signal interference distribution between the plurality of APs managed by the radio controller and an occlusion relationship between the plurality of APs. During channel allocation to the plurality of APs, the radio controller allocates different channels to APs that have an occlusion relationship, and then allocates channels to other APs that have no occlusion relationship with reference to the signal interference distribution between the plurality of APs. The method is different from a currently widely used radio calibration technology that focuses on signal interference distribution during channel allocation. Because APs that have an occlusion relationship are usually closer to each other, and signals between two or more APs that have an occlusion relationship are weak, the AP usually consider that the APs that have an occlusion relationship are remote APs. Normally, if a same channel is allocated to adjacent APs, the adjacent APs may try to avoid a signal from a neighboring AP when performing signal transmission, to avoid co-channel interference. However, when two or more APs that have an occlusion relationship perform signal transmission, because a neighboring signal is weak, the APs that have an occlusion relationship are not avoided during the signal transmission. Therefore, the APs that have an occlusion relationship are hidden nodes, and impact of co-channel interference on terminals is usually severer. During channel allocation in this application, on a basis of channel allocation performed based on neighbor relationships, RSSIs, or path loss values between plurality of APs, it needs to be preferentially ensured that different channels are allocated for APs that have an occlusion relationship.

In the solution provided in this application, during channel allocation, different channels are allocated for APs that have an occlusion relationship first. When there are still allocable channels, different channels are allocated for APs that are close to each other based on signal interference distribution (for example, neighbor relationships, RSSIs, or path loss values between a plurality of APs). A same channel may be allocated for APs that are far away from each other. This avoids the following case: co-channel interference that is severer than that caused between common adjacent APs is caused in the channel allocation process in a case that a same channel is allocated to two or more APs that have an occlusion relationship, and further reduces adverse impact of the co-channel interference on the communication quality.

The following separately describes a channel allocation method provided in this application.

### 1. A radio controller allocates channels to a plurality of APs.

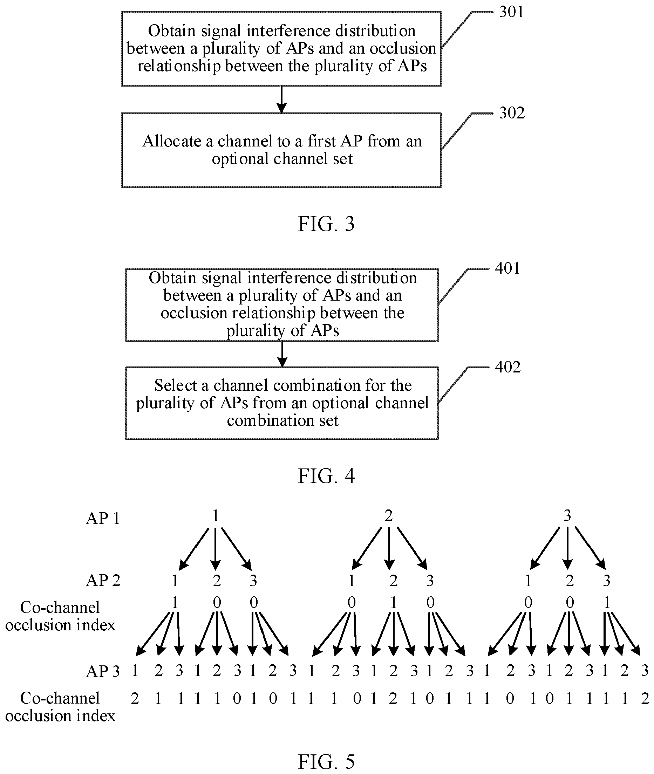

After obtaining signal interference distribution between the plurality of APs and an occlusion relationship between the plurality of APs, the radio controller sequentially allocates the channels to the plurality of APs, where channels allocated to the APs that have an occlusion relationship are different. In this embodiment of this application, for example, the plurality of APs include an AP 1, an AP 2, and an AP 3, where the AP 1 has an occlusion relationship with both the AP 2 and the AP 3, and there are three channels for selection in total: a channel 1, a channel 2, and a channel 3. For a specific implementation, refer to FIG. 3. FIG. 3 is a schematic flowchart of a channel allocation method according to an embodiment of this application.

301: The radio controller obtains the signal interference distribution between the plurality of APs and the occlusion relationship between the plurality of APs.

The radio controller obtains the signal interference distribution between the plurality of APs and the occlusion relationship between the plurality of APs. The plurality of APs are APs all managed by the radio controller, and the signal interference distribution may be RSSIs between the plurality of APs, path loss values between the plurality of APs, distances between the plurality of APs, neighbor relationships between the plurality of APs, or the like.

The radio controller collects the signal interference distribution from the plurality of APs, such as the RSSIs, the path loss values, or the neighbor relationships between the APs. The radio controller may alternatively accept parameters that are manually input, such as neighbor relationships or distances between the APs.

The occlusion relationship between the plurality of APs may be manually input, or may be automatically obtained by a device. For example, the device may infer the occlusion relationship based on an engineering drawing. If there is a camera, the occlusion relationship may alternatively be inferred by an artificial intelligence device based on camera's perception for an environment. For another example, the occlusion relationship may be learned of by the radio controller based on the plurality of APs and a movable measurement terminal in the environment. Refer to FIG. 2A. The following briefly introduces that the radio controller obtains the occlusion relationship between the plurality of APs based on the plurality of APs and the movable measurement terminal in the environment. The measurement terminal separately measures terminal path loss values between the AP 1 and the terminal and between the AP 2 and the terminal. However, in a phase in which the AP 1 and the AP 2 detect each other, the AP 1 and the AP 2 learn of a detection path loss value between the AP 1 and the AP 2 through mutual signal detection. Due to the existence of an occluder (for example, the beam in FIG. 2A), the detection path loss value is much greater than that in a case in which there is no occluder. Therefore, a relationship between the two terminal path loss values and the detection path loss value varies greatly in cases in which there is an occluder and in which there is no occluder. If a theoretical path loss value between the AP 1 and the AP 2 is inferred based on the two terminal path loss values, it may be found that the theoretical path loss value is much smaller than an actual path loss value. Therefore, the radio controller may compare the theoretical path loss value with the detection path loss value. If a difference between the theoretical path loss value and the detection path loss value is greater than a threshold, it is considered that there is an occlusion relationship between the AP 1 and the AP 2.

In this application, an example in which the radio controller manages the AP 1, the AP 2, and the AP 3 is used. The AP 1 has an occlusion relationship with both the AP 2 and the AP 3. Therefore, the occlusion relationship between the plurality of APs herein includes an occlusion relationship between the AP 1 and the AP 2 and an occlusion relationship between the AP 1 and the AP 3.

302: The radio controller allocates a channel to a first AP from an optional channel set.

After obtaining the signal interference distribution between the plurality of APs and the occlusion relationship between the plurality of APs, the radio controller allocates the channel to the first AP from the optional channel set. The radio controller sequentially allocates channels to the AP 1, the AP 2, and the AP 3. First, the radio controller allocates a channel to the AP 1. In this case, the first AP is the AP 1, and a second AP is the AP 2 or the AP 3. Because a channel has not been allocated to the second AP, the optional channel set includes the channel 1, the channel 2, and the channel 3, and the radio controller allocates the channel 1 to the AP 1. Next, the radio controller allocates a channel to the AP 2. The first AP is the AP 2, the second AP is the AP 1, and a channel set allocated to the AP 1 is the channel 1. In this case, the optional channel set includes the channel 2 and the channel 3, and the radio controller allocates the channel 2 to the AP 2. Finally, the radio controller allocates a channel to the AP 3. The first AP is the AP 3, and the second AP is the AP 1. Because the channel set allocated to the AP 1 is the channel 1, the optional channel set in this case includes the channel 2 and the channel 3, and the radio controller allocates the channel 2 to the AP 3.

It should be noted that, the descriptions herein are merely an example, and are intended to illustrate that, when the radio controller allocates a channel to the first AP, the radio controller may allocate a channel to the first AP randomly on a basis of ensuring that the channel is different from a channel allocated to the second AP. A specific implementation during actual application is not limited.

After allocating the channels to the APs that have an occlusion relationship, the radio controller still follows a principle of allocating different channels to adjacent APs to the fullest extent when allocating channels to APs that have no occlusion relationship in the plurality of APs, and allocates the channels to the APs that have no occlusion relationship in the plurality of APs based on the RSSIs between the plurality of APs or the path loss values between the plurality of APs.

In this embodiment of this application, after obtaining the signal interference distribution between the plurality of APs managed by the radio controller and the occlusion relationship between the plurality of APs, the radio controller determines an optional channel set of the first AP based on the occlusion relationship, and allocates a channel to the first AP from the optional channel set, where a channel allocated to the second AP is excluded from the optional channel set. A case in which a same channel is allocated to an AP pair that has an occlusion relationship is avoided, the channel allocation is efficiently completed, and communication quality of a wireless network is improved.

### 2. A radio controller allocates a channel combination to a plurality of APs.

Usually, after a case in which a same channel is allocated to APs that have an occlusion relationship is excluded, there may be a plurality of possible allocation methods, that is, an optional channel combination set. Selection for an optimal optional channel combination may be further performed. In this embodiment of this application, for example, the radio controller manages an AP 1, an AP 2, and an AP 3, where the AP 1 has an occlusion relationship with both the AP 2 and the AP 3, and there are three channels for selection in total: a channel 1, a channel 2, and a channel 3. For a specific implementation, refer to FIG. 4. FIG. 4 is another schematic flowchart of a channel allocation method according to an embodiment of this application.

401: The radio controller obtains signal interference distribution between the plurality of APs and the occlusion relationship between the plurality of APs.

Step 401 in this embodiment of this application is similar to step 301 in the foregoing embodiment shown in FIG. 3. Details are not described herein again.

402: The radio controller selects the channel combination for the plurality of APs from the optional channel combination set.

After obtaining the signal interference distribution between the plurality of APs and the occlusion relationship between the plurality of APs, the radio controller selects the channel combination for the plurality of APs from the optional channel combination set, to avoid allocating a same channel to the AP 1 and the AP 2 that have an occlusion relationship and a same channel to the AP 1 and the AP 3 that have an occlusion relationship. The radio controller further selects an optimal solution based on the RSSIs of the plurality of APs. A specific optimal channel selection method is divided into optimal selection of a plurality of times. FIG. 5 is a schematic diagram of channel allocation combinations according to an embodiment of this application.

FIG. 5 lists all possible channel allocation cases of the AP 1, the AP 2, and the AP 3. If a same channel is allocated to occluded APs, a co-channel occlusion index is increased by 1. If different channels are allocated to all APs that have an occlusion relationship among the AP 1, the AP 2, and the AP 3, the co-channel occlusion index is 0. From results shown in FIG. 5, optional channel combinations of the plurality of APs may be learned, and the radio controller further selects an optimal optional channel combination.

The radio controller establishes an algorithm model by using RSSIs between the plurality of APs, to calculate optional channel combinations, so as to obtain optional channel combinations with smallest sums of interference, selects any one of the optional channel combinations with smallest sums of interference, and allocates channels corresponding to the AP 1, the AP 2, and the AP 3 in the combination to the three APs respectively. The channel allocation is completed.

Further, after the foregoing optimal selection based on the RSSIs between the plurality of APs is completed, bandwidths and/or channel reuse rates of the optional channel combinations may be calculated based on a requirement, and a plurality of optional channel combinations are ranked to obtain an optimal channel combination.

In this embodiment of this application, after the radio controller obtains the signal interference distribution between the plurality of APs and the occlusion relationship between the plurality of APs, the radio controller selects the channel combination for the plurality of APs from the optional channel combination set. If there is more than one optional combination in the optional channel combinations, the radio controller may further select an optimal solution from the optional channel combination set based on the requirement, so that network transmission efficiency of a wireless network is further improved.

### 3. A radio controller divides a plurality of APs into groups, and allocates channels to APs in each group.

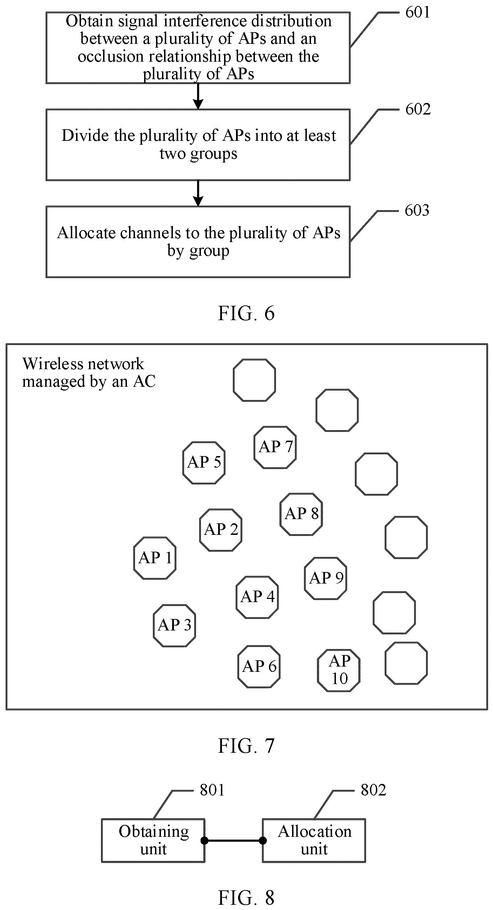

In a known wireless network, one radio controller usually needs to manage hundreds of APs. To reduce calculation workload of channel allocation, this embodiment of this application proposes that a plurality of APs managed by the radio controller may be divided into groups, and the channels are allocated to the plurality of APs by group. In this embodiment of this application, for example, an AP 1, an AP 2, and an AP 3 managed by the radio controller are allocated to a same group, where the AP 1 has an occlusion relationship with both the AP 2 and the AP 3, and there are three channels for selection in total: a channel 1, a channel 2, and a channel 3. For a specific implementation, refer to FIG. 6. FIG. 6 is another schematic flowchart of a channel allocation method according to an embodiment of this application.

601: The radio controller obtains signal interference distribution between the plurality of APs and an occlusion relationship between the plurality of APs.

Step 601 in this embodiment of this application is similar to step 401 in the foregoing embodiment shown in FIG. 4. Details are not described herein again.

602: The radio controller divides the plurality of APs into at least two groups.

After obtaining the signal interference distribution between the plurality of APs and the occlusion relationship between the plurality of APs, the radio controller divides the plurality of APs into groups based on a neighbor relationship between the plurality of APs and the occlusion relationship between the plurality of APs.

For ease of understanding, refer to FIG. 7. FIG. 7 is a schematic diagram of another system of a wireless local area network according to an embodiment of this application. A wireless local area network shown in FIG. 7 includes a plurality of APs, where only an AP 1 to an AP 10 are marked. The AP 1 has an occlusion relationship with an AP 2, the AP 1 has an occlusion relationship with an AP 3, and the AP 1 has a neighbor relationship with each of an AP 4 to the AP 10.

It should be noted that interference may not be caused between all APs in the plurality of APs. When two APs are physically far away from each other, no interference is caused even if the two APs use a same channel.

The following describes a grouping manner provided in this application with reference to the figure.

### A. Use a quantity of APs in a group as a grouping criterion.

In this application, an example in which a quantity of APs in a group is 3 is used for description.

Any AP is selected from the plurality of APs and added to a group. The AP 4 is allocated to a first group, and an AP that has an occlusion relationship with the AP 4 is grouped into the first group, until all APs that have an occlusion relationship with the AP 4 are allocated to the first group. APs that have a neighbor relationship with the AP 4 are added to the first group in descending order of interference strength until the quantity of APs in the first group reaches 3. It should be noted that each time an AP is added to the first group, an AP that has an occlusion relationship with the AP needs to be allocated to the first group. An allocation manner of a second group is similar to that of the first group. Details are not described herein again.

Neighbors of the AP 4 are an AP 9, an AP 6, an AP 8, the AP 2, and the AP 3 in descending order of interference strength. The AP 9 and the AP 6 are added to the first group in sequence. The quantity of APs in the first group reaches 3, and grouping of the first group is completed. Such a grouping method can greatly reduce an amount of channel allocation calculation, and improve channel allocation efficiency.

An AP with a smallest sum of interference is selected from the plurality of APs and added to a group. In other words, the grouping starts from an edge AP of the wireless network. The AP 1 with the smallest sum of interference is allocated to a first group, and an AP that has an occlusion relationship with the AP 1 is allocated to the first group. After all APs that have an occlusion relationship with the AP 1 are allocated to the first group, APs that have a neighbor relationship with the AP 1 are added to the first group in descending order of interference strength until the quantity of APs in the first group reaches 3. It should be noted that each time an AP is added to the first group, an AP that has an occlusion relationship with the AP needs to be allocated to the first group. An allocation manner of the second group is similar to that of the first group. Details are not described herein again.

Because both the AP 2 and the AP 3 have an occlusion relationship with the AP 1, the AP 2 and the AP 3 are added to the first group. The first group already has three APs, so that the grouping of the first group is completed. In comparison with randomly selecting one AP for grouping, such a grouping method of dividing the plurality of APs into the at least two groups is more regular.

### B. Use a value of interference strength as a criterion.

Any AP is selected from the plurality of APs and added to a group. The AP 4 is allocated to a first group, and an AP that has an occlusion relationship with the AP 4 is grouped into the first group, until all APs that have an occlusion relationship with the AP 4 are allocated to the first group. APs with interference strength greater than -95 dBm in APs that have a neighbor relationship with the AP 4 are added to the first group. It should be noted that each time an AP is added to the first group, an AP that has an occlusion relationship with the AP needs to be allocated to the first group. An allocation manner of a second group is similar to that of the first group. Details are not described herein again.

Interference strength of an AP 9, an AP 6, and an AP 8 in neighbors of the AP 4 is greater than -95 dBm. Therefore, the AP 9, the AP 6, and the AP 8 are added to the first group in sequence, and grouping of the first group is complete. Such a grouping method can greatly reduce an amount of channel allocation calculation, and improve channel allocation efficiency.

An AP with a smallest sum of interference is selected from the plurality of APs and added to a group. In other words, the grouping starts from an edge AP of the wireless network. The AP 1 with the smallest sum of interference is allocated to a first group, and an AP that has an occlusion relationship with the AP 1 is allocated to the first group. After all APs that have an occlusion relationship with the AP 1 are allocated to the first group, APs whose interference strength is greater than -95 dBm in the APs that have a neighbor relationship with the AP 1 are added to the first group. It should be noted that each time an AP is added to the first group, an AP that has an occlusion relationship with the AP needs to be allocated to the first group. An allocation manner of the second group is similar to that of the first group. Details are not described herein again.

Because both an AP 2 and an AP 3 have an occlusion relationship with the AP 1, the AP 2 and the AP 3 are added to the first group. Interference strength between an AP 5 and the AP 1 is greater than -95 dBm. Therefore, the AP 5 is added to the first group. In comparison with randomly selecting an AP for grouping, using such a grouping method can obtain a more centralized grouping combination, further reduce a sum of interference of the plurality of APs, and improve a communication effect of the wireless network.

It should be noted that the descriptions of the grouping manner in this embodiment of this application is merely an example, and a specific grouping manner is not limited during actual application.

603: The radio controller allocates channels to the plurality of APs by group.

After dividing the plurality of APs into groups, the radio controller allocates the channels to the plurality of APs by group. Due to different grouping criteria, a plurality of grouping results may be generated, in this embodiment of this application, an example in which the AP 1, the AP 2, and the AP 3 are allocated to the first group is used. An action similar to step 402 in the channel allocation method shown in FIG. 4 is performed. Details are not described herein again.

In this embodiment of this application, after the radio controller obtains the signal interference distribution between the plurality of APs and the occlusion relationship between the plurality of APs, the radio controller divides the plurality of APs into at least two groups, and allocates the channels to the plurality of APs by group. On a basis of improving the communication effect of the wireless network, the calculation amount in the channel allocation process is further reduced, and the channel allocation efficiency is improved.

The foregoing describes the channel allocation method provided in this application, and the following describes a network device provided in this application.

FIG. 8 is a schematic diagram of a structure of a network device according to an embodiment of this application.

This application provides a network device, including:
an obtaining unit 801, configured to obtain signal interference distribution between a plurality of APs and an occlusion relationship between the plurality of APs; and
an allocation unit 802, configured to allocate channels to the plurality of APs based on the signal interference distribution and the occlusion relationship, where channels allocated to APs that have an occlusion relationship are different.

The network device has functions of executing the channel allocation methods in FIG. 3, FIG. 4, and FIG. 6. Details are not described herein again. The functions may be implemented by hardware, or may be implemented by hardware executing corresponding software. The hardware or the software includes one or more modules corresponding to the functions.

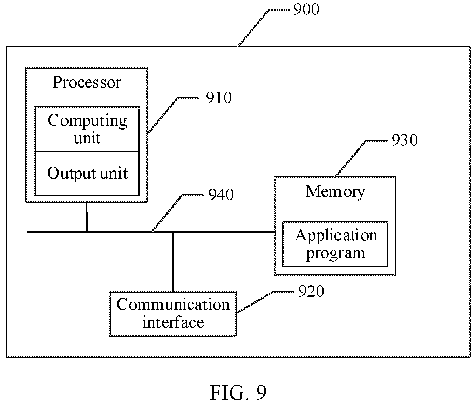

FIG. 9 is a schematic diagram of another structure of a network device according to an embodiment of this application. The network device 900 includes a processor 910, a communication interface 920, and a memory 930. The processor 910, the communication interface 920, and the memory 930 may be connected to each other via an internal bus 940, or communication may be implemented in another manner, for example, via wireless transmission. In this embodiment of this application, a connection via the bus 940 is used as an example. The bus 940 may be a peripheral component interconnect (PCI) bus, an extended industry standard architecture (EISA) bus, or the like. The bus 940 may be classified as an address bus, a data bus, a control bus, and the like. For ease of representation, only one thick line is used to represent the bus in FIG. 9, but this does not mean that there is only one bus or only one type of bus.

The processor 910 may include at least one general-purpose processor, for example, a central processing unit (CPU), or a combination of the CPU and a hardware chip. The hardware chip may be an application-specific integrated circuit (ASIC), a programmable logic device (PLD), or a combination thereof. The PLD may be a complex programmable logic device (CPLD), a field programmable gate array (FPGA), a generic array logic (GAL), or any combination thereof. The processor 910 executes various types of digital storage instructions, such as software or firmware programs stored in the memory 930, so that the computing device 900 is enabled to provide various services.

The memory 930 is configured to store program code, and the processor 910 controls and executes the program code, to perform processing steps of the occlusion recognition method in the foregoing embodiments. The program code may include one or more software modules. The one or more software modules may be the software module provided in FIG. 8, for example, the obtaining unit or the allocation unit. The obtaining unit is configured to obtain signal interference distribution between a plurality of APs and an occlusion relationship between the plurality of APs. The allocation unit is configured to allocate channels to the plurality of APs based on the signal interference distribution and the occlusion relationship, where channels allocated to APs that have an occlusion relationship are different.

It should be noted that this embodiment may be implemented by a general-purpose physical server, for example, an ARM server or an X86 server, or may be implemented by a virtual machine that is implemented based on a general-purpose physical server in combination with an NFV technology. The virtual machine is a softwarestimulated complete computer system with a function of a complete hardware system and operates in a fully isolated environment. This is not specifically limited in this application.

The memory 930 may include a volatile memory, for example, a random access memory (RAM); or the memory 930 may also include a non-volatile memory, for example, a read-only memory (ROM), a flash memory, a hard disk drive (HDD), or a solid-state drive (SSD); or the memory 930 may also include a combination of the foregoing types of memories. The memory 930 may store program code, to perform steps 301 to 302 in FIG. 3 and optional steps thereof, steps 401 and 402 in FIG. 4, or steps 601 to 603 in FIG. 6. Details are not described herein again.

The communication interface 920 may be a wired interface (for example, an Ethernet interface), an internal interface (for example, a peripheral component interconnect express (PCIe) bus interface), the wired interface (for example, an Ethernet interface), or a wireless interface (for example, a cellular network interface or a wireless local area network interface). The communication interface 920 is configured to communicate with another device or module.

It should be noted that FIG. 9 is merely a possible implementation of this embodiment of this application. During actual application, the computing device 900 may alternatively include more or fewer components. This is not limited herein. For contents that are not shown or not described in this embodiment of this application, refer to related descriptions in FIG. 3, FIG. 4 or FIG. 6. Details are not described herein again.

It should be understood that the computing device shown in FIG. 9 may alternatively be a computer cluster including at least one server. This is not specifically limited in this application.

An embodiment of this application further provides a computer-readable storage medium. The computer-readable storage medium stores instructions. When the instructions are run on a processor, the method procedures shown in FIG. 3, FIG. 4, or FIG. 6 are implemented.

An embodiment of this application further provides a computer program product. When the computer program product runs on a processor, the method procedures shown in FIG. 3, FIG. 4, or FIG. 6 are implemented.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and methods may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a ROM, a RAM, a magnetic disk, or an optical disc.

## Claims

1. A channel allocation method, comprising:
obtaining, by a radio controller, signal interference distribution between a plurality of access points (APs) and an occlusion relationship between the plurality of APs; and
allocating, by the radio controller, channels to the plurality of APs based on the signal interference distribution and the occlusion relationship, wherein channels allocated to APs that have an occlusion relationship are different.

2. The method according to claim 1, wherein the allocating, by the radio controller, channels to the plurality of APs based on the signal interference distribution and the occlusion relationship comprises:
allocating, by the radio controller, a channel to a first AP in an optional channel set, wherein a channel allocated to a second AP is excluded from the optional channel set, the second AP has an occlusion relationship with the first AP, and the first AP and the second AP are APs in the plurality of APs.

3. The method according to claim 1, wherein the allocating, by the radio controller, channels to the plurality of APs based on the signal interference distribution and the occlusion relationship comprises:
selecting, by the radio controller, a channel combination for the plurality of APs from an optional channel combination set, wherein an interference channel combination is excluded from the optional channel combination set, the channel combination is a combination of channels respectively allocated to the plurality of APs, and the interference channel combination is a channel combination in which a same channel is allocated to APs that have an occlusion relationship.

4. The method according to claim 3, wherein the selecting, by the radio controller, a channel combination for the plurality of APs from an optional channel combination set comprises:
selecting, by the radio controller, the channel combination for the purpose of reducing a sum of interference between the APs.

5. The method according to claims 1 to 4, wherein the allocating, by the radio controller, channels to the plurality of APs based on the signal interference distribution and the occlusion relationship comprises:
dividing, by the radio controller, the plurality of APs into at least two groups, wherein in any one of the groups, there is no AP that has an occlusion relationship with an AP in another group in any one of the groups; and
allocating, by the radio controller, the channels to the plurality of APs by group.

6. A network device, comprising:
an obtaining unit, configured to obtain signal interference distribution between a plurality of access points (APs) and an occlusion relationship between the plurality of APs; and
an allocation unit, configured to allocate channels to the plurality of APs based on the signal interference distribution and the occlusion relationship, wherein channels allocated to APs that have an occlusion relationship are different.

7. The network device according to claim 6, wherein the allocation unit is specifically configured to:
allocate a channel to a first AP in an optional channel set, wherein an intersection set of the optional channel set and a channel set allocated to a second AP is null, the second AP has an occlusion relationship with the first AP, and the first AP and the second AP are APs in the plurality of APs.

8. The network device according to claim 6, wherein the allocation unit is specifically configured to:
select a channel combination for the plurality of APs from an optional channel combination set, wherein an interference channel combination is excluded from the optional channel combination set, the channel combination is a combination of channels respectively allocated to the plurality of APs, and the interference channel combination is a channel combination in which a same channel is allocated to APs that have an occlusion relationship.

9. The network device according to claim 8, wherein the allocation unit is specifically configured to:
select the channel combination for the purpose of reducing a sum of interference between the APs.

10. The network device according to claims 6 to 9, wherein the allocation unit is specifically configured to:
divide the plurality of APs into at least two groups, wherein in any one of the groups, there is no AP that has an occlusion relationship with an AP in another group; and
allocate the channels to the plurality of APs by group.

11. A network device, comprising a processor and a memory, wherein the memory is configured to store instructions, the processor is configured to execute the instructions, and when the processor executes the instructions, the processor performs the method according to any one of claims 1 to 5.

12. A computer-readable storage medium, wherein the computer-readable storage medium comprises instructions, and when the instructions are run on a computer, the computer is enabled to perform the method according to any one of claims 1 to 5.
